# EUROPEAN PATENT APPLICATION

(11) **EP 4 651 562 A1**
(43) Date of publication of application: **19.11.2025**
(21) Application number: 23915406.5
(22) Date of filing: 13.01.2023
(51) Int. Cl.: H04W 36/00, H04W 76/15

(54) **COMMUNICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2023/072214
(87) International publication number: WO 2024/148637

(57) **Abstract**

The embodiments of the present disclosure relate to the technical field of communication, and provide a communication method and apparatus, a device, and a storage medium, which are applicable to an STA. The method comprises: receiving a first radio frame, the first radio frame comprising a first association identifier AID allocated by a first AP to an STA, and a second AID preallocated to the STA by at least one second AP. The embodiments of the present disclosure provide a method for providing, to an STA, AIDs allocated to the STA by a plurality of APs.

## Description

### FIELD

Embodiments of the present disclosure relate to the field of communication technology, and more particularly, embodiments of the present disclosure relate to a communication method and apparatus, a device, and a storage medium.

### BACKGROUND

As wireless fidelity (Wi-Fi) technology continues to evolve, researchers have proposed the next generation of Wi-Fi technology: ultra high reliability (UHR). The vision is to improve the reliability of wireless local area network (WLAN) connections, reduce latency, improve manageability, increase system throughput, and reduce the power consumption of the corresponding devices.

In the UHR technology, when the communication condition between the station (STA) and the associated access point (AP) is unstable or interrupted, the STA switches to other APs for communication to accommodate the low-latency service transmission needs. In order to ensure that the STA may communicate normally after switching to other APs and does not need to re-establish the initial association connection with the switched AP, the STA needs to obtain the association identifier (AID) pre-assigned to the STA by the switched AP in advance. But how the STA obtains the AID pre-assigned to the STA by other APs is not yet conclusive.

### SUMMARY

Embodiments of the present disclosure provide a communication method and apparatus, a device, and a storage medium, which may provide a way to assign an AID to an STA.

In a first aspect, embodiments of the present disclosure provide a communication method applicable to a station (STA), and the method includes:
receiving a first wireless frame, in which the first wireless frame includes a first association identifier (AID) assigned to the STA by a first access point (AP) and at least one second AID pre-assigned to the STA by at least one second AP.

In a second aspect, embodiments of the present disclosure provide a communication method applicable to a first AP, and the method includes:
determining a first wireless frame, in which the first wireless frame includes a first AID assigned to an STA by the first AP and at least one second AID pre-assigned to the STA by at least one second AP; and
sending the first wireless frame.

In a third aspect, embodiments of the present disclosure provide a communication method applicable to a second AP, and the method includes:
sending a second wireless frame, in which the second wireless frame includes a second AID pre-assigned to an STA by the second AP, the second wireless frame is used to instruct a first AP to send the second AID to the STA by carrying the second AID in a first wireless frame, and the first wireless frame includes a first AID assigned to the STA by the first AP.

In a fourth aspect, embodiments of the present disclosure further provide a communication apparatus, which includes:
a first transceiver unit, configured to receive a first wireless frame, in which the first wireless frame includes a first AID assigned to an STA by a first AP and at least one second AID pre-assigned to the STA by at least one second AP.

In a fifth aspect, embodiments of the present disclosure further provide a communication apparatus, which includes:
a first determining unit, configured to determine a first wireless frame, in which the first wireless frame includes a first AID assigned to an STA by a first AP and at least one second AID pre-assigned to the STA by at least one second AP; and
a second transceiver unit, configured to send the first wireless frame.

In a sixth aspect, embodiments of the present disclosure further provide a communication apparatus, which includes:
a third transceiver unit, configured to send a second wireless frame, in which the second wireless frame includes a second AID pre-assigned to an STA by the second AP, the second wireless frame is used to instruct a first AP to send the second AID to the STA by carrying the second AID in a first wireless frame, and the first wireless frame includes a first AID assigned to the STA by the first AP.

In a seventh aspect, embodiments of the present disclosure further provide an electronic device including a memory, a processor and a computer program stored in the memory and executed by the processor, in which the processor executes the computer program to implement the communication method according to any one of embodiments of the present disclosure.

Embodiments of the present disclosure provide a communication method, which enables the first AP to send the at least one second AID pre-assigned to the STA by the at least one second AP along with the first AID in the process of assigning the first AID to the STA, such that the STA may obtain the second AP pre-assigned by the second AP in advance when communicating with the first AP. Therefore, when switching from the first AP to any second AP, communication with the switched second AP may be achieved without re-establishing an initial association connection.

Additional aspects and advantages of embodiments of present disclosure are given in part in the following descriptions, and become apparent from the following descriptions, or are learned from the practice of the embodiments of the present invention.

### BRIEF DESCRIPTION OF THE DRAWINGS

To describe technical solutions in embodiments of the present disclosure more clearly, the following briefly introduces the accompanying drawings required for the description of the embodiments of the present disclosure. Obviously, the accompanying drawings described below show some embodiments of the present disclosure, and those skilled in the art can obtain other drawings based on these drawings without paying creative efforts.
FIG. 1 is a flowchart of a communication method provided by an embodiment of the present disclosure;
FIG. 2 is another flowchart of a communication method provided by an embodiment of the present disclosure;
FIG. 3 is a further flowchart of a communication method provided by an embodiment of the present disclosure;
FIGS. 4a-4d are schematic diagrams of scenarios of a communication method provided by an embodiment of the present disclosure;
FIG. 5 is a structural block diagram of a communication apparatus provided by an embodiment of the present disclosure;
FIG. 6 is another structural block diagram of a communication apparatus provided by an embodiment of the present disclosure;
FIG. 7 is a further structural block diagram of a communication apparatus provided by an embodiment of the present disclosure; and
FIG. 8 is a structural block diagram of an electronic device provided by an embodiment of the present disclosure.

### DETAILED DESCRIPTION OF THE DISCLOSURE

In embodiments of the present disclosure, the term "and/or" describes the association relationship of the associated objects, and means that there can be three types of relationships. For example, A and/or B, can mean that A exists alone, A and B exist at the same time, and B exists alone. The character "/" generally indicates that the associated objects before and after it are an "or" relationship.

In embodiments of the present disclosure, the term "plurality of" refers to two or more than two, and other quantifiers are similar.

Illustrative embodiments will be illustrated in detail herein, and the examples thereof are shown in the accompanying drawings. When the following description refers to the accompanying drawings unless otherwise specified, the same or similar elements are denoted by the same numerals in the different accompanying drawings. Implementations described in the illustrative embodiments do not represent all implementations consistent with the present disclosure. On the contrary, they are merely examples of a device and a method consistent with some aspects of the present disclosure, as elaborated in the appended claims.

The terms used in the present disclosure are only for purpose of description of particular embodiments, and are not intended to limit the present disclosure. The singular form "a", "the" and "this" used in the present disclosure and the appended claims is also intended to include the plural form, unless other meanings are explicitly expressed in the context. It should be understood that the term "and/or" used herein refers to include any or all of the possible combinations of one or a plurality of listed related items.

It should be understood that although the terms "first", "second", "third" may be employed by the present disclosure to describe various information, these information should not limited by these terms. These terms are only used to distinguish the information of the same type from each other. For example, first information may be referred to as second information without departing from the scope of the present disclosure, and similarly, the second information may also be referred to as the first information. Depending on the context, the word "if" used here may be interpreted as "when...", "upon..." or "in response to determination".

Technical solutions in embodiments of the present disclosure will be clearly and completely described below with reference to the accompanying drawings in the embodiments of the present disclosure. It is apparent that the described embodiments are only a part of the embodiments of the present disclosure, and are not the all of them. Based on the embodiments of the present disclosure, all other embodiments obtained by those skilled in the art without paying creative efforts, fall into the protection scope of the present disclosure.

The method and the apparatus are based on the same disclosure conception, and since the method and the apparatus solve problems on similar principles, the implementation of the apparatus and the method may be referred to each other, and the repetition is not repeated.

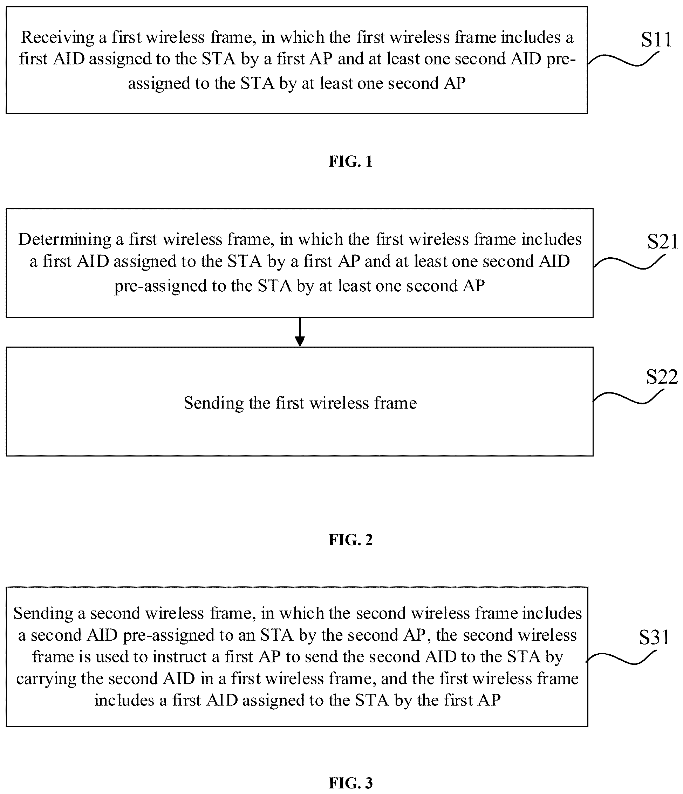

A communication method provided by embodiments of the present disclosure is applicable to an STA. Specifically, this may be seen in FIG. 1, and FIG. 1 is a flowchart of a communication method provided by an embodiment of the present disclosure.

Optionally, the method may include following steps.

In step S11, a first wireless frame is received, the first wireless frame includes a first AID assigned to the STA by a first AP and at least one second AID pre-assigned to the STA by at least one second AP.

The STA may receive the first wireless frame sent by the first AP in a process of establishing an initial association connection with the first AP; and the first wireless frame includes the first AID assigned to the STA by the first AP and also includes the at least one second AID pre-assigned to the STA by the at least one second AP.

The first AP and the second AP in embodiments of the present disclosure may be APs affiliated to the same or different AP MLDs, or may be different AP MLDs or independent APs, which is not limited herein.

The STA in embodiments of the present disclosure may be an independent STA not affiliated to any MLD, or may be an STA affiliated to a Non-AP MLD, which is not limited herein.

The AP MLD may represent an access point device supporting the multi-connection communication function, and the non-AP MLD may represent a station device supporting the multi-connection communication function.

In the communication method applied to the STA provided by embodiments of the present disclosure, the first AID and each second AID are identical.

In a case where the first AID and each second AID are identical, the STA may share the same AID between the first AP and the at least one second AP, i.e., the STA may communicate with the first AP based on the AID, and may likewise communicate with any second AP based on the same AID in a case of switching to the second AP.

In the communication method applied to the STA provided by embodiments of the present disclosure, the first AID is different from at least one second AID, i.e., at least one second AID among the second AIDs pre-assigned to the STA by all the second APs is identical to the first AID.

For any second AP, in a case where the first AID is identical to the second AID pre-assigned to the STA by the second AP, the STA may share the same AID between the first AP and the second AP, i.e., the STA may communicate with the first AP based on the AID, and may likewise communicate with the second AP based on the AID in a case of switching to the second AP.

For any second AP, in a case where the first AID is different from the second AID pre-assigned to the STA by the second AP, when the STA needs to switch to the second AP in the process of communicating with the first AP, the STA needs to communicate with the second AP based on the second AID pre-assigned to the STA by the second AP.

In the communication method applied to the STA provided by embodiments of the present disclosure, a media access control (MAC) address of each second AP or a MAC address of an MLD to which the second AP is affiliated is associated with a corresponding second AID.

When each second AP is affiliated to the MLD, the MAC address of the MLD to which the second AP is affiliated is associated with the second AID pre-assigned to the STA by the second AP.

When each second AP is an independent AP or MLD, the MAC address of the second AP is associated with the second AID pre-assigned to the STA by the second AP.

Based on this, in the case where different second APs are associated with respective second AIDs pre-assigned to the STA, the STAmay, based on any second AID, communicate with the second AP associated with the second AID.

In the communication method applied to the STA provided by embodiments of the present disclosure, the second AID pre-assigned to the STA by each second AP is within a preset AID range.

The AIDs within the preset AID range are AIDs used for pre-assignment to the STA, and for any second AP, the AID assigned to any STA by the second AP in a process of establishing the initial association connection with the STA may be outside the preset AID range, reducing the likelihood of the AID pre-assigned by the second AP conflicting with the AIDs already assigned.

The preset AID range may be determined according to actual needs, for example the preset AID range may be determined to be 1-60, and for any second AP, a value range of the AID pre-assigned to any STA by the second AP in the process of establishing an initial association connection with the STA may be within 1-60.

In the communication method applied to the STA provided by embodiments of the present disclosure, in a case where the first AID assigned to the STA by the first AP is identical to at least one AID already assigned by the first AP, the STA may obtain an AID re-assigned to the STA by the first AP.

To avoid communication conflicts with different STAs, each AP assigns a different AID to each STA. Therefore, in a case where the first AID assigned to the STA by the first AP is identical to an AID already assigned to at least one other STA by the first AP, the STA needs to obtain an AID re-assigned to STA by the first AP, satisfying communication needs of the STA with the first AP.

In the communication method applied to the STA provided by embodiments of the present disclosure, in a case where all the second AIDs include a third AID that is identical to at least one AID already assigned by a corresponding second AP, the STA may obtain an AID re-assigned to the STA by a target AP.

The target AP is a second AP corresponding to the third AID.

In a case where the second AID pre-assigned to the STA by any second AP is identical to an AID already assigned to at least one other STA by the second AP, the STA needs to obtain an the AID re-assigned to the STA by the second AP, satisfying communication needs of the STA with the second AP.

As an example, if AP1 is a second AP, in a case where the second AID pre-assigned to the STA by AP1 is identical to an AID already assigned to at least one other STA by AP1, the STA may obtain an AID re-assigned to the STA by AP1.

In the communication method applied to the STA provided by embodiments of the present disclosure, in a case where all the second AIDs include a third AID that is identical to at least one AID already assigned by a corresponding second AP and the STA obtain the AID re-assigned to the STA by a target AP corresponding to the third AID, the STA may obtain an AID re-assigned to the STA by the target AP from the first AP.

The target AP may send the AID re-assigned to the STA to the first AP, and the STA may obtain the AID re-assigned to the STA by the target AP from the first AP.

Optionally, in a case where all the second AIDs include a third AID that is identical to at least one AID already assigned by a corresponding second AP and the STA obtain the AID re-assigned to the STA by a target AP corresponding to the third AID, the STA may obtain an AID re-assigned to the STA by the target AP from the target AP in a case of switching to the target AP.

The AID re-assigned to the STA by the target AP is identical to the AID pre-assigned to the STA by the target AP.

In the communication method applied to the STA provided by embodiments of the present disclosure, the first AP and each second AP belong to a same device group, the first AP is a master device in the device group, and each second AP is a slave AP in the device group.

The first AP (master AP) is an owner of the device group and may be used to manage the communication status and communication mode of each second AP (slave AP).

In the communication method applied to the STA provided by embodiments of the present disclosure, the first wireless frame includes an association response frame, which may also be other message frames sent by the first AP in the process of establishing an initial association connection with the first AP.

A communication method provided by embodiments of the present disclosure is applicable to a first AP. Specifically, this may be seen in FIG. 2, and FIG. 2 is another flowchart of a communication method provided by an embodiment of the present disclosure.

Optionally, the method may include following steps.

In step S21, a first wireless frame is determined, the first wireless frame includes a first AID assigned to an STA by the first AP and at least one second AID pre-assigned to the STA by at least one second AP.

The first AP may determine the first wireless frame in a process of establishing an initial association connection with the STA.

The second AID pre-assigned to the STA by each second AP is obtained from the respective second AP by the first AID.

The first AP and the second AP in embodiments of the present disclosure may be APs affiliated to the same or different AP MLDs, or may be different AP MLDs or independent APs, which is not limited herein.

The STAin embodiments of the present disclosure may be an independent STA not affiliated to any MLD, or may be an STA affiliated to a Non-AP MLD, which is not limited herein.

The AP MLD may represent an access point device supporting the multi-connection communication function, and the non-AP MLD may represent a station device supporting the multi-connection communication function.

Each second AID in the first wireless frame is used to enable the STA to communicate with a corresponding second AP based on each second AID when the STA switches to the corresponding second AP.

In step S22, the first wireless frame is sent.

The first AP may send the first wireless frame to the STA in a process of establishing an initial association connection with the STA; and the first wireless frame includes the first AID assigned to the STA by the first AP and also includes the at least one second AID pre-assigned to the STA by the at least one second AP.

In the communication method applied to the first AP provided by embodiments of the present disclosure, the first AID and each second AID are identical.

In a case where the first AID in a first message frame and each second AID are identical, the first message frame sent to the STA by the first AP may enable the STA to share the same AID between the first AP and the at least one second AP, such that the STA may communicate with the first AP based on the AID, and may communicate with any second AP based on the same AID in a case of switching to the second AP.

In the communication method applied to the first STA provided by embodiments of the present disclosure, the second AID pre-assigned to the STA by each second AP is within a preset AID range.

The AIDs within the preset AID range are AIDs used for pre-assignment to the STA, and for any second AP, the AID assigned to any STA by the second AP in a process of establishing the initial association connection with the STA may be outside the preset AID range, reducing the likelihood of the AID pre-assigned by the second AP conflicting with the AIDs already assigned.

The preset AID range may be determined according to actual needs, for example the preset AID range may be determined to be 1-60, and for any second AP, a value range of the AID pre-assigned to any STA by the second AP in the process of establishing an initial association connection with the STA may be within 1-60.

The communication method applied to the first AP provided by embodiments of the present disclosure further includes receiving least one second wireless frame, in which each second wireless frame includes a second AID pre-assigned to the STA by one of the at least one second AP.

The first AP may receive the second wireless frame sent by each second AP before sending the first wireless frame to the STA, and the second wireless frame sent by each second AP includes a second AID pre-assigned to the STA by the second AP.

As an example, after receiving an association request frame sent by the STA, the first AP sends indication information used to indicate the AID pre-assigned to the STA to each second AP, and obtains the second wireless frame sent by each second AP, and the second wireless frame sent by each second AP includes a second AID pre-assigned to the STA by the second AP.

In the communication method applied to the first AP provided by embodiments of the present disclosure, a third wireless frame is sent to each second AP after establishing a communication connection with the STA.

Each third wireless frame includes a first AID assigned to the STA by the first AP and further includes a MAC address of the STA or a MAC address of an MLD to which the STA is affiliated.

The first AP may obtain a MAC address of the STA or a MAC address of an MLD to which the STA is affiliated in a process of establishing a communication connection with the STA.

In a case where the STA is affiliated to the MLD, the first AP obtains the MAC address of the MLD to which the STA is affiliated in a process of establishing a communication connection with the STA, and sends a third wireless frame to each second AP after establishing a communication connection with the STA, in which each third wireless frame includes the MAC address of the MLD to which the STA is affiliated.

In a case where the STA is not affiliated to the MLD, the first AP obtains the MAC address of the STA in a process of establishing a communication connection with the STA, and sends a third wireless frame to each second AP after establishing a communication connection with the STA, in which each third wireless frame includes the MAC address of the STA.

In the communication method applied to the first AP provided by embodiments of the present disclosure, a MAC address of each second AP or a MAC address of an MLD to which the second AP is affiliated is associated with a corresponding second AID.

When each second AP is affiliated to the MLD, the MAC address of the MLD to which the second AP is affiliated is associated with the second AID pre-assigned to the STA by the second AP.

When each second AP is an independent AP or MLD, the MAC address of the second AP is associated with the second AID pre-assigned to the STA by the second AP.

Based on this, in the case where different second APs are associated with respective second AIDs pre-assigned to the STA, the STA may, based on any second AID, communicate with the second AP associated with the second AID.

In the communication method applied to the first STA provided by embodiments of the present disclosure, in a case where the first AID assigned to the STA by the first AP is identical to at least one AID already assigned by the first AP, the first STA may re-assign an AID to STA.

To avoid communication conflicts with different STAs, each AP assigns a different AID to each STA. Therefore, in a case where the first AID assigned to the STA by the first AP is identical to an AID already assigned to at least one other STA by the first AP, the first AP needs to re-assign an AID to STA, satisfying communication needs of the STA with the first AP.

In the communication method applied to the first STA provided by embodiments of the present disclosure, in a case where all the second AIDs include a third AID that is identical to at least one AID already assigned by a corresponding second AP, the first AP may obtain the AID re-assigned to the STA by a target AP from the target AP, such that the STA obtains an AID re-assigned to the STA by the target AP from the first AP.

The target AP is a second AP corresponding to the third AID.

In a case where the second AID pre-assigned to the STA by any second AP is identical to an AID already assigned to at least one other STA by the second AP, the first AP needs to obtain an AID re-assigned to the STA by the second AP, such that the STA may obtain the AID assigned to the STA by the target AP directly from the STA.

As an example, if AP1 is a second AP, in a case where the second AID pre-assigned to the STA by AP1 is identical to an AID already assigned to at least one other STA by AP1, the first AP obtains an AID re-assigned to the STA by AP1, such that the STA obtains the AID re-assigned by AP1 from the first AP.

The AID re-assigned to the STA by the target AP is identical to the AID pre-assigned to the STA by the target AP.

In the communication method applied to the first AP provided by embodiments of the present disclosure, the first AP and each second AP belong to a same device group, the first AP is a master device in the device group, and each second AP is a slave AP in the device group.

The first AP (master AP) is an owner of the device group and may be used to manage the communication status and communication mode of each second AP (slave AP).

In the communication method applied to the first AP provided by embodiments of the present disclosure, the first wireless frame includes an association response frame, which may also be other message frames sent by the first AP in the process of establishing an initial association connection with the STA.

A communication method provided by embodiments of the present disclosure is applicable to a second AP. Specifically, this may be seen in FIG. 3, and FIG. 3 is a further flowchart of a communication method provided by an embodiment of the present disclosure.

Optionally, the method may include following steps.

In step S31, a second wireless frame is sent, in which the second wireless frame includes a second AID pre-assigned to an STA by the second AP, the second wireless frame is used to instruct a first AP to send the second AID to the STA by carrying the second AID in a first wireless frame, and the first wireless frame includes a first AID assigned to STA by the first AP.

The first wireless frame is sent by the first AP to the STA in a process of establishing an initial association connection with the STA to enable the STA to communicate with the first AP based on the first AID.

The second AID in the first wireless frame is used to enable the STA to communicate with the second AP based on the second AID in a case of switching to the second AP.

The second AP may send the second wireless frame to the first AP before the first AP sends the first wireless frame to the STA.

The first AP and the second AP in embodiments of the present disclosure may be APs affiliated to the same or different AP MLDs, or may be different AP MLDs or independent APs, which is not limited herein.

The STA in embodiments of the present disclosure may be an independent STA not affiliated to any MLD, or may be an STA affiliated to a Non-AP MLD, which is not limited herein.

The AP MLD may represent an access point device supporting the multi-connection communication function, and the non-AP MLD may represent a station device supporting the multi-connection communication function.

In the communication method applied to the second AP provided by embodiments of the present disclosure, the first AID and each second AID are identical.

In a case where the first AID and the second AID are identical, the STA may share the same AID between the first AP and the second AP, i.e., the STA may communicate with the first AP based on the AID, and may likewise communicate with the second AP based on the same AID in a case of switching to the second AP.

In the communication method applied to the second AP provided by embodiments of the present disclosure, the first AID is different from the second AID.

In a case where the first AID is different from the second AID pre-assigned to the STA by the second AP and the STA needs to switch to the second AP in the process of communicating with the first AP, the STA needs to communicate with the second AP based on the second AID pre-assigned to the STA by the second AP.

In the communication method applied to the first STA provided by embodiments of the present disclosure, the second AID pre-assigned to the STA by the second AP is within a preset AID range.

The AIDs within the preset AID range are AIDs used for pre-assignment to the STA, and the AID assigned to any STA by the second AP in a process of establishing the initial association connection with the STA may be outside the preset AID range, reducing the likelihood of the AID pre-assigned by the second AP conflicting with the AIDs already assigned.

The preset AID range may be determined according to actual needs, for example the preset AID range may be determined to be 1-60, and for any second AP, a value range of the AID pre-assigned to any STA by the second AP in the process of establishing an initial association connection with the STA may be within 1-60.

In the communication method applied to the second AP provided by embodiments of the present disclosure, a MAC address of the second AP or a MAC address of an MLD to which the second AP is affiliated is associated with a corresponding second AID.

When the second AP is affiliated to the MLD, the MAC address of the MLD to which the second AP is affiliated is associated with the second AID pre-assigned to the STA by the second AP.

When the second AP is an independent AP or MLD, the MAC address of the second AP is associated with the second AID pre-assigned to the STA by the second AP.

In the communication method applied to the second AP provided by embodiments of the present disclosure, in a case where the second AID is identical to at least one AID already assigned by the second AP, the second AP may re-assign an AID to the STA, and send the re-assigned AID to the first AP, such that the STA may obtain the AID re-assigned to the STA by the second AP directly from the first AP.

In the communication method applied to the second AP provided by embodiments of the present disclosure, in a case where the second AID is identical to at least one AID already assigned by the second AP, the second AP may re-assign an AID to the STA, and provide an AID re-assigned to the STA directly to the STA after the STA switches to the second AP.

In the communication method applied to the second AP provided by embodiments of the present disclosure, the first AP and the second AP belong to a same device group, the first AP is a master device in the device group, and the second AP is a slave AP in the device group.

The first AP (master AP) is an owner of the device group and may be used to manage the communication status and communication mode of the second AP (slave AP).

In the communication method applied to the second AP provided by embodiments of the present disclosure, the first wireless frame includes an association response frame, which may also be other message frames sent by the first AP in the process of establishing an initial association connection with the STA.

The communication method applied to the second AP provided by embodiments of the present disclosure further includes: receiving a third wireless frame sent by the first AP.

The third wireless frame is sent to the second AP by the first AP after establishing a communication connection with the STA.

The third wireless frame includes a first AID assigned to the STA by the first AP and further includes a MAC address of the STA or a MAC address of an MLD to which the STA is affiliated.

The MAC address of the STA or the MAC address of the MLD to which the STA is affiliated is obtained by the first AP in a process of establishing a communication connection with the STA.

In a case where the STA is affiliated to the MLD, the third wireless frame includes the MAC address of the MLD to which the STA is affiliated. In a case where the STA is not affiliated to the MLD, the third wireless frame includes the MAC address of the STA.

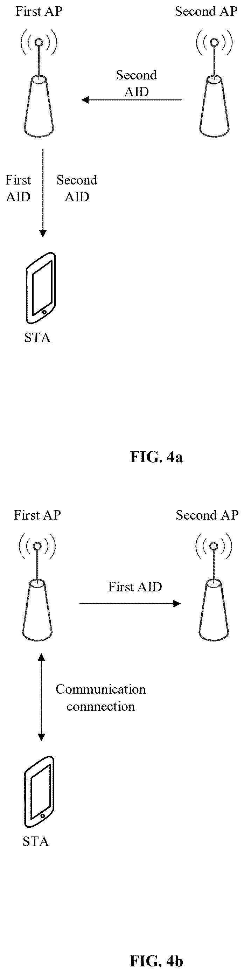

A communication method provided by embodiments of the present disclosure is further described below in conjunction with examples illustrated in FIGS. 4a to 4d.

As illustrated in FIG. 4a, a first AP receives a second wireless frame sent by a second AP, and the second wireless frame includes a second AID pre-assigned to an STA by the second AP. The first AP sends a first wireless frame to the STA in a case of establishing an initial association connection with the STA; and the first wireless frame includes a first AID assigned to the STA by the first AP and also includes the second AID pre-assigned to the STA by the second AP.

As illustrated in FIG. 4b, the first AP sends a third wireless frame to the second AP after the first AP establishes the initial association connection with the STA; and the third wireless frame includes the first AID assigned to the STA by the first AP.

The first wireless frame further includes a MAC address of the STA or a MAC address of an MLD to which the STA is affiliated.

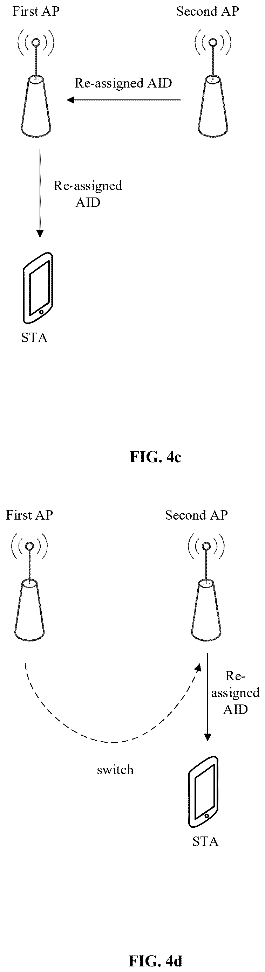

As illustrated in FIG. 4c, in the case where the first AID and the second AID in FIG. 4a are identical, the second AP may determine an AID re-assigned to the STA and send the AID re-assigned to the STA to the first AID.

The first AP sends the AID re-assigned to the STA by the second AP to the STA after receiving the AID re-assigned to the STA and sent by the second AP.

As illustrated in FIG. 4d, in the case where the first AID and the second AID in FIG. 4a are identical, when the STA switches from the process of communicating with the first AID to the process of communicating with the second AID, the second AP may directly send the STA the AID re-assigned to the STA.

Embodiments of the present disclosure provide a communication method, which enables the first AP to send the at least one second AID pre-assigned to the STA by the at least one second AP to the STA along with the first AID in the process of assigning the first AID to the STA, such that the STA may obtain the second AP pre-assigned by the second AP in advance when communicating with the first AP. Furthermore, in a case where the AID assigned to the STA by any AP is identical to an AID already assigned by the AP, the STA may further obtain an AID assigned to the STA by the AP. Based on this, for the STA, when switching from the first AP to any second AP, the STA may achieve communication with the switched second AP without re-establishing an initial association connection.

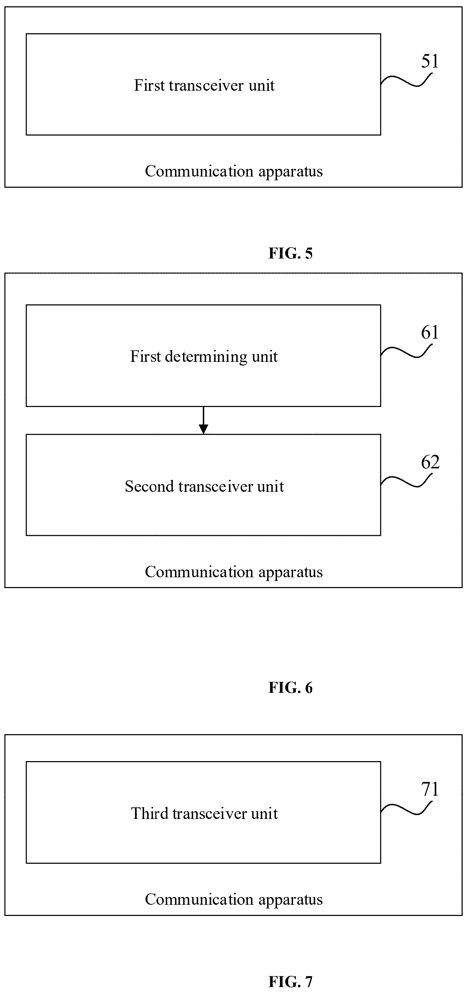

As illustrated in FIG. 5, embodiments of the present disclosure provide a communication apparatus including:
a first transceiver unit 51, configured to receive a first wireless frame, in which the first wireless frame includes a first association identifier (AID) assigned to an STA by a first AP and at least one second AID pre-assigned to the STA by at least one second AP.

Optionally, in embodiments of the present disclosure, the first AID and each second AID are identical.

Optionally, in embodiments of the present disclosure, the first AID is different from at least one second AID.

Optionally, in embodiments of the present disclosure, a MAC address of each second AP or a MAC address of a multi-link device (MLD) to which the second AP is affiliated is associated with a corresponding second AID.

Optionally, in embodiments of the present disclosure, each second AID is within a preset AID range.

Optionally, in embodiments of the present disclosure, the first transceiver unit 51 is further configured to:
in a case where the first AID is identical to at least one AID already assigned by the first AP, obtain an AID re-assigned to the STA by the first AP.

Optionally, in embodiments of the present disclosure, the first transceiver unit 51 is further used to:
in a case where the at least one second AID includes a third AID that is identical to at least one AID already assigned by a corresponding second AP, obtain an AID re-assigned to the STA by a target AP, in which the target AP is a second AP corresponding to the third AID.

Optionally, in embodiments of the present disclosure, the first transceiver unit 51 in case of obtaining the AID re-assigned to the STA by the target AP is configured to:
obtain the AID re-assigned to the STA by the target AP from the first AP; or
in a case of switching to the target AP, obtain the AID re-assigned to the STA by the target AP from the target AP.

Optionally, in embodiments of the present disclosure, the first wireless frame includes an association response frame.

Optionally, in embodiments of the present disclosure, the first AP and each second AP belong a same device group, the first AP is a master AP, and each second AP is a slave AP.

As illustrated in FIG. 6, embodiments of the present disclosure provide a communication apparatus including:
a first determining unit 61, configured to determine a first wireless frame, in which the first wireless frame includes a first AID assigned to an STA by a first AP and at least one second AID pre-assigned to the STA by at least one second AP; and
a second transceiver unit 62, configured to send the first wireless frame.

Optionally, in embodiments of the present disclosure, the first AID and each second AID are identical.

Optionally, in embodiments of the present disclosure, the first AID is different from at least one second AID.

Optionally, in embodiments of the present disclosure, the second transceiver unit 62 is further configured to:
receive at least one second wireless frame, in which each second wireless frame includes a second AID pre-assigned to the STA by one of the at least one second AP.

Optionally, in embodiments of the present disclosure, the second transceiver unit 62 is further configured to:
after establishing a communication connection with the STA, send a third wireless frame to each second AP, in which each third wireless frame includes the first AID and further includes a MAC address of the STA or a MAC address of an MLD to which the STA is affiliated.

Optionally, in embodiments of the present disclosure, a MAC address of each second AP or a MAC address of an MLD to which the second AP is affiliated is associated with a corresponding second AID.

Optionally, in embodiments of the present disclosure, each second AID is within a preset AID range.

Optionally, in embodiments of the present disclosure, the second transceiver unit 62 is further configured to:
in a case where the first AID is identical to at least one AID already assigned by the first AP, re-assign an AID to the STA.

Optionally, in embodiments of the present disclosure, the second transceiver unit 62 is further configured to:
in a case where the at least one second AID includes a third AID that is identical to at least one AID already assigned by a corresponding second AP, obtain an AID re-assigned to the STA by a target AP such that the STA obtains the AID re-assigned by the target AP from the first AP, in which the target AP is a second AP corresponding to the third AID.

Optionally, in embodiments of the present disclosure, the first messages frame includes an association response frame.

Optionally, in embodiments of the present disclosure, the first AP and each second AP belong a same device group, the first AP is a master AP, and each second AP is a slave AP.

As illustrated in FIG. 7, embodiments of the present disclosure provide a communication apparatus including:
a third transceiver unit 71, configured to send a second wireless frame, in which the second wireless frame includes a second AID pre-assigned to an STA by a second AP, the second wireless frame is used to instruct a first AP to send the second AID to the STA by carrying the second AID in a first wireless frame, and the first wireless frame includes a first AID assigned to the STA by the first AP.

Optionally, in embodiments of the present disclosure, the third transceiver unit 71 is further configured to:
receive a third wireless frame, in which the third wireless frame includes an AID pre-assigned to the STA by the first AP and further includes a MAC address of the STA or a MAC address of an MLD to which the STA is affiliated.

Optionally, in embodiments of the present disclosure, the third transceiver unit 71 is further configured to:
in a case where the second AID is identical to at least one AID already assigned by the second AP, re-assign an AID to the STA.

Optionally, in embodiments of the present disclosure, the third transceiver unit 71 in case of re-assigning the AID to the STA is configured to:
send the AID re-assigned to the STA to the first AP such that the first AP sends the STA the AID re-assigned to the STA; or
in a case where the STA is switched to the second AP, re-assign an AID to the STA.

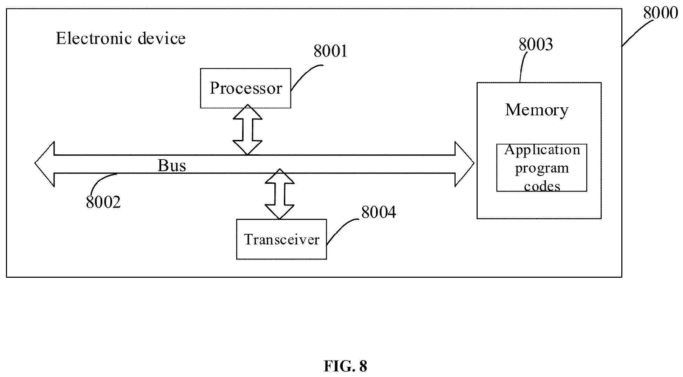

Embodiments of the present disclosure further provide an electronic device, and as illustrated in FIG. 8, the electronic device 8000 illustrated in FIG. 8 includes: a processor 8001 and a memory 8003. The processor 8001 and the memory 8003 are connected, e.g., via the bus 8002. Optionally, the electronic device 8000 may also include a transceiver 8004. It should be noted that the transceiver 8004 is not limited to one in practical applications, and the structure of this electronic device 8000 does not constitute a limitation of embodiments of the present disclosure.

The memory 8003 is used to store application codes for executing embodiments of the present disclosure and is controlled for execution by the processor 8001. When the electronic device 8000 is used as a first AP device, the processor 8001 is used to execute the application codes stored in the memory 8003 to implement the communication method provided by embodiments of the present disclosure applied to the corresponding device as an STA, a first AID, or a second AP.

The bus 8002 may include a pathway to transfer information between the above components. The bus 8002 may be a PCI (Peripheral Component Interconnect) bus or an EISA (Extended Industry Standard Architecture) bus, etc. The bus 8002 may be divided into address bus, data bus, control bus, etc. For ease of representation, only one thick line is shown in FIG. 8, but this does not indicate that there is only one bus or one type of bus.

The memory 8003 may be Read Only Memory (ROM) or other types of static storage devices capable of storing static information and instructions, Random Access Memory (RAM) or other types of dynamic storage devices capable of storing information and instructions, or electrically erasable programmable read-only memory (EEPROM), Compact Disc Read Only Memory (CD-ROM) or other optical disc storage, optical disk storage (including compressed disks, laser disks, optical disks, digital versatile disks, Blue-ray disks, etc.), magnetic disc storage media or other magnetic storage devices, or any other media capable of being used for carrying or storing desired program code in the form of instructions or data structures and capable of being accessed by any other medium capable of carrying or storing desired program code in the form of instructions or data structures and capable of being accessed by a computer, without limitation.

Embodiments of the present disclosure provide a computer readable storage medium storing a computer program thereon, a computer executes the computer program to perform the corresponding contents of the method embodiments described above.

It should be appreciated that although the individual steps in the flowchart of the accompanying drawings are shown sequentially as indicated by the arrows, the steps are not necessarily performed sequentially in the order indicated by the arrows. Unless expressly stated herein, the execution of these steps is not strictly limited in order, and they may be executed in any other order. Moreover, at least part of the steps in the flowchart of the accompanying drawings may include a plurality of sub-steps or a plurality of phases, these sub-steps or phases are not necessarily executed to completion at the same moment but may be executed at different moments, and the order of their execution is not necessarily sequential, but may be executed in turn or alternately with at least part of other steps or sub-steps or phases of other steps.

It should be noted that the computer readable storage medium described above in the present disclosure may be a computer readable signal medium or a computer readable storage medium or any combination thereof. The computer readable storage medium may, for example, be - but is not limited to - a system, apparatus, or device of electricity, magnetism, light, electromagnetism, infrared, or semiconductors, or a combination of any of the foregoing. More specific examples of the computer readable medium include but are not limited to: an electronic connection with one or more wires, a portable computer disk, a hard disc, a random access memory (RAM), a read only memory (ROM), an erasable programmable read-only memory (EPROM or a flash memory), optical fiber, an optical storage device, a magnetic storage device, or any suitable combination of the above-mentioned. In the present disclosure, a computer readable storage medium may be any tangible medium containing or storing a program, and the program may be used by or in combination with an instruction-executing system, apparatus, or device. In the present disclosure, the computer readable signal medium may include a data signal propagated in a baseband or as part of a carrier, carrying computer readable program codes. Such propagated data signals may take a variety of forms, including, but not limited to, electromagnetic signals, optical signals, or any suitable combination of the above-mentioned. The computer readable signal medium may also be any computer readable storage medium other than the computer readable storage medium, and the computer readable signal medium may send, propagate, or transmit a program for use by, or in conjunction with, an instruction-executing system, apparatus, or device. The program codes contained on the computer readable storage medium may be transmitted using any suitable medium, including, but not limited to: wire, fiber optic cable, RF (radio frequency), or any suitable combination of the above mentioned.

The computer readable storage medium may be contained in the STA, the first AID, or the second AP; or it may stand alone and not be assembled into the STA, the first AID, or the second AP.

The computer readable storage medium carries one or more programs that, when the one or more programs are executed by the source device, the relay device or the target device, cause the STA, the first AID or the second AP to execute the corresponding communication method.

According to an aspect of the present disclosure, there is provided a computer program product or computer program, the computer program product or computer program includes computer instructions, and the computer instructions are stored in a computer readable storage medium. The processor of the computer device reads the computer instructions from the computer readable storage medium, and the processor executes the computer instructions such that the computer device performs the communication method provided in the various optional implementations described above.

Computer program codes for performing the operations of the present disclosure may be written in one or more programming languages or combinations thereof, including object-oriented programming languages - such as Java, Smalltalk, C++ - and conventional procedural programming languages - such as the 'C' language or similar programming languages. The program codes may be executed entirely on the user computer, partially on the user computer, as a stand-alone software package, partially on the user computer and partially on a remote computer, or entirely on a remote computer or server. In situations involving the remote computer, the remote computer may be connected to the user computer via any kind of network, including a local area network (LAN) or a wide area network (WAN), or it may be connected to an external computer (e.g., by using an Internet Service Provider (ISP) to connect via the Internet).

The flowcharts and block diagrams in the accompanying drawings illustrate the architecture, functionality, and operation capable of being implemented in accordance with systems, methods, and computer program products of various embodiments of the present disclosure. In this regard, each block in the flowchart or block diagram may represent a module, program segment, or portion of codes containing one or more executable instructions for implementing a specified logical function. It should also be noted that in some alternative implementations, the functions indicated in the blocks may also occur in a different order than indicated in the accompanying drawings. For example, two consecutively represented blocks can actually be executed essentially in parallel, and they can sometimes be executed in reverse order, depending on the function involved. It should also be noted that each block in the block diagram and/or flowchart, and combinations of blocks in the block diagram and/or flowchart, may be implemented with a dedicated hardware-based system for performing the specified function or operation, or may be implemented with a combination of dedicated hardware and computer instructions.

The modules described and involved in embodiments of the present disclosure may be implemented by way of software or may be implemented by way of hardware. The name of the module does not in some cases constitute a limitation of the module itself, for example, module A may also be described as 'module A for performing operation B'.

The above description is only preferred embodiments of the present disclosure and an illustration of the technical principles employed. It should be understood by those skilled in the art that the disclosure scope involved in the present disclosure is not limited to a technical solution formed by a particular combination of the above technical features, but should also cover other technical solutions formed by any combination of the above technical features or their equivalent features without departing from the above concepts of the present disclosure. For example, the technical solution formed by interchanging the above features with (but not limited to) technical features with similar functions disclosed in the present disclosure.

## Claims

1. A communication method, applied to a station (STA), comprising:
receiving a first wireless frame, wherein the first wireless frame comprises a first association identifier (AID) assigned to the STA by a first access point (AP) and at least one second AID pre-assigned to the STA by at least one second AP.

2. The communication method according to claim 1, wherein the first AID and each second AID are identical.

3. The communication method according to claim 1, wherein the first AID is different from at least one second AID.

4. The communication method according to claim 1, wherein a medium access control (MAC) address of each second AP or a MAC address of a multi-link device (MLD) to which the second AP is affiliated is associated with a corresponding second AID.

5. The communication method according to claim 1, wherein each second AID is within a preset AID range.

6. The communication method according to claim 1, further comprising:
in a case where the first AID is identical to at least one AID already assigned by the first AP, obtaining an AID re-assigned to the STA by the first AP.

7. The communication method according to claim 1, further comprising:
in a case where the at least one second AID comprises a third AID that is identical to at least one AID already assigned by a corresponding second AP, obtaining an AID re-assigned to the STA by a target AP, wherein the target AP is a second AP corresponding to the third AID.

8. The communication method according to claim 7, wherein obtaining the AID re-assigned to the STA by the target AP comprises at least one of:
obtaining the AID re-assigned to the STA by the target AP from the first AP; or
in a case of switching to the target AP, obtaining the AID re-assigned to the STA by the target AP from the target AP.

9. The communication method according to claim 1, wherein the first AP and each second AP belong to a same device group, the first AP is a master AP, and each second AP is a slave AP.

10. A communication method, applied to a first AP, comprising:
determining a first wireless frame, wherein the first wireless frame comprises a first AID assigned to an STA by the first AP and at least one second AID pre-assigned to the STA by at least one second AP; and
sending the first wireless frame.

11. The communication method according to claim 10, wherein the first AID and each second AID are identical.

12. The communication method according to claim 10, wherein the first AID is different from at least one second AID.

13. The communication method according to claim 10, further comprising:
receiving at least one second wireless frame, wherein each second wireless frame comprises a second AID pre-assigned to the STA by one of the at least second AP.

14. The communication method according to claim 10, further comprising:
after establishing a communication connection with the STA, sending a third wireless frame to each second AP, wherein each third wireless frame comprises the first AID and further comprises a MAC address of the STA or a MAC address of an MLD to which the STA is affiliated.

15. The communication method according to claim 10, wherein a MAC address of each second AP or a MAC address of an MLD to which the second AP is affiliated is associated with a corresponding second AID.

16. The communication method according to claim 10, wherein each second AID is within a preset AID range.

17. The communication method according to claim 10, further comprising:
in a case where the first AID is identical to at least one AID already assigned by the first AP, re-assigning an AID to the STA.

18. The communication method according to claim 10, further comprising:
in a case where the at least one second AID comprises a third AID that is identical to at least one AID already assigned by a corresponding second AP, obtaining an AID re-assigned to the STA by a target AP such that the STA obtains the AID re-assigned by the target AP from the first AP, wherein the target AP is a second AP corresponding to the third AID.

19. The communication method according to claim 10, wherein the first AP and each second AP belong to a same device group, the first AP is a master AP, and each second AP is a slave AP.

20. A communication method, applied to a second AP, comprising:
sending a second wireless frame, wherein the second wireless frame comprises a second AID pre-assigned to an STA by the second AP, the second wireless frame is used to instruct a first AP to send the second AID to the STA by carrying the second AID in a first wireless frame, and the first wireless frame comprises a first AID assigned to the STA by the first AP.

21. The communication method according to claim 20, further comprising:
receiving a third wireless frame, wherein the third wireless frame comprises an AID pre-assigned to the STA by the first AP and further comprises a MAC address of the STA or a MAC address of an MLD to which the STA is affiliated.

22. The communication method according to claim 20, further comprising:
in a case where the second AID is identical to at least one AID already assigned by the second AP, re-assigning an AID to the STA.

23. The communication method according to claim 22, wherein re-assigning the AID to the STA comprises at least one of:
sending the AID re-assigned to the STA to the first AP such that the first AP sends the STA the AID re-assigned to the STA; or
in a case where the STA is switched to the second AP, re-assigning an AID to the STA.

24. A communication apparatus, comprising:
a first transceiver unit, configured to receive a first wireless frame, wherein the first wireless frame comprises a first AID assigned to an STA by a first AP and at least one second AID pre-assigned to the STA by at least one second AP.

25. A communication apparatus, comprising:
a first determining unit, configured to determine a first wireless frame, wherein the first wireless frame comprises a first AID assigned to an STA by a first AP and at least one second AID pre-assigned to the STA by at least one second AP; and
a second transceiver unit, configured to send the first wireless frame.

26. A communication apparatus, comprising:
a third transceiver unit, configured to send a second wireless frame, wherein the second wireless frame comprises a second AID pre-assigned to an STA by a second AP, the second wireless frame is used to instruct a first AP to send the second AID to the STA by carrying the second AID in a first wireless frame, and the first wireless frame comprises a first AID assigned to the STA by the first AP.

27. An electronic device, comprising: a memory, a processor and a computer program stored in the memory and executed by the processor, wherein the processor executes the computer program to implement the communication method according to any one of claims 1 to 23.

28. A computer readable storage medium storing a computer program thereon, wherein a processor executes the computer program to implement the communication method according to any one of claims 1 to 23.
